# EUROPÄISCHE PATENTSCHRIFT

(11) **EP 3 586 638 B1**
(45) Veröffentlichungstag und Bekanntmachung des Hinweises auf die Patenterteilung: **27.01.2021**
(21) Anmeldenummer: 18197219.1
(22) Anmeldetag: 27.09.2018
(51) Int. Cl.: A23C 1/05, A23C 1/16, A23C 9/152, A23C 9/16, A23C 9/18, A23L 33/00, A23P 10/40, F26B 3/12, A23C 1/04, C13K 5/00

(54) **VERFAHREN ZUR HERSTELLUNG VON MILCHPULVER MIT LACTOSE**
METHOD FOR PRODUCING MILKPOWDER WITH LACTOSE
PROCÉDÉ DE PRODUCTION DE POUDRE DE LAIT AVEC LACTOSE

(30) Priorität: 25.06.2018 EP 18179597
(43) Veröffentlichungstag der Anmeldung: 01.01.2020
(73) Patentinhaber: DMK Deutsches Milchkontor GmbH, 27404 Zeven (DE)
(72) Erfinder: DÖRING, Sven-Rainer, 27404 Zeven (DE)
(74) Vertreter: Fabry, Bernd

(56) Entgegenhaltungen:
- EP-A1- 2 123 164
- EP-A1- 2 946 669
- WO-A1-2013/169097
- WO-A1-2017/037131
- WO-A1-2017/064239
- WO-A1-2018/091409
- US-A- 2 730 449
- US-A- 4 871 573
- US-A- 5 069 118
- US-A1- 2017 000 144
- RATTRAY W ET AL: "Protein standardization of milk and dairy products", TRENDS IN FOOD SCIENCE AND TECHNOLOGY, ELSEVIER SCIENCE PUBLISHERS, GB, Bd. 7, Nr. 7, 1. Januar 1996 (1996-01-01), Seite 227, XP002421597, ISSN: 0924-2244, DOI: 10.1016/0924-2244(96)10024-8
- VANDNA SIKAND ET AL: "Impact of protein standardization of milk powder with lactose or permeate on whey protein nitrogen index and heat classification", DAIRY SCIENCE & TECHNOLOGY, Bd. 88, Nr. 1, 1. Januar 2008 (2008-01-01) , Seiten 105-120, XP055573235, FR ISSN: 1958-5586, DOI: 10.1051/dst:2007011

## Beschreibung

### PRIORITÄTSANSPRUCH

Die vorliegende Patentanmeldung beansprucht die Priorität der jüngeren Europäischen Patentanmeldung EP 18 179 597.2 vom 25. Juni 2018.

### GEBIET DER ERFINDUNG

Die Erfindung befindet sich auf dem Gebiet der Molkereiprodukte und betrifft ein Verfahren zur Herstellung von Magermilchpulvern mit Lactose.

### STAND DER TECHNIK

Das Trocknen von Milch gehört zu den Standardoperationen im Bereich der Molkereiindustrie, weil die so erhaltenen Pulver eine hohe Lagerbeständigkeit aufweisen und mit geringem Aufwand bevorratet und verschickt werden können.

Milchpulver dürfen durch den Zusatz von Lactose oder Milchpermeat standardisiert werden, wobei die Normen in Europa wegen der unterschiedlichen Zusammensetzung der Milch abweichen: während in den skandinavischen Ländern ein hoher Proteingehalt von 38 Gew.-% in der Trockenmasse (TM) typisch ist, liegt der Proteingehalt in Südeuropa mit 32 bis 33 Gew.-% in der TM deutlich niedriger. Für Deutschland ist ein Mittelwert von 36 Gew.-% in der TM typisch.

Um einen zu hohen Proteingehalt im Pulver auf einen vorgegebenen Wert abzusenken ("standardisieren") können der Milch Lactose oder Milchpermeat zugesetzt werden. Nicht zulässig ist hingegen nach EU-Verordnung der Zusatz von Molke oder Molkederivaten.

In der Praxis wird die Milch durch Verdampfung zunächst auf ein Vorkonzentrat mit einem Proteingehalt von 36 Gew.-% in der TM eingestellt, welches dann in einem zweiten Schritt auf eine Trockenmasse on etwa 50 Gew.-% in der TM weiter konzentriert wird. Die Standardisierung kann in jeder der beiden Verdampferstufen erfolgen. Anschließend wird das Konzentrat auf einen Sprühturm gegeben, in dem es in bekannter Weise dann zu einem Pulver getrocknet wird, welches dann beispielsweise einen Proteingehalt von 36 Gew.-% aufweist.

Milchpermeat ist als Standardisierungszusatz zwar relativ günstig in der Herstellung aber nicht immer und überall verfügbar. Von Nachteil ist zudem auch der hohe Mineralstoffgehalt zu. Lactose ist hingegen in großen Mengen überall verfügbar aber als Zusatzstoff deutlich teurer.Von erheblichem Nachteil ist ferner, dass man die feste Lactose nicht in die Milchkonzentrate eindosieren kann, weil dabei spontane Entmischung erfolgt. Eine solche Dispersion lässt sich jedoch nicht problemlos versprühen.

Stattdessen wird die Lactose dem Milchkonzentrat als wässrige, typischerweise 20 Gew.-%ige Lösung zugesetzt. Auch diese Variante ist jedoch nachteilig, da man die Lactose bei ihrer Herstellung zunächst mit hohem Aufwand aus der Mutterlauge kristallisiert, nur um sie dann wieder aufzulösen und ein weiteres Mal zu trocknen.

US4871573 offenbart beispielsweise ein Verfahren zur Herstellung von Milchpulver bei dem Glukose-Sirup mit fettarmer Milch vermischt und Konzentriert wird, mit unter 2 µm großen Lactose-Kristalle beimpft, gekühlt und mit Milchfettbestandteilen aus Sahne vermischt wird und die Mischung unter Druck homogenisiert und sprüh-getrocknet wird. WO2017037131 offenbart eine Methode zur Herstellung von sprüh-getrockneten Milchpulver mit amorphen Zucker wobei der Zucker (Lactose, Sucrose oder eine Mischung davon) mit einem flüssigen Milch-Produkt vermischt und sprühgetrockne. Das sprühgetrockente Pulver hat eine Teilchengrösse von 100-200 µm.

Die Aufgabe der vorliegenden Erfindung hat daher darin bestanden, Milchpulver mit standardisiertem Proteingehalt durch Zugabe von Lactose sowie ein entsprechendes Herstellverfahren zur Verfügung zu stellen, die frei von den geschilderten Nachteilen des Stands der Technik sind.

### BESCHREIBUNG DER ERFINDUNG

Der Gegenstand der Erfindung betrifft ein Verfahren zur Herstellung von Milchpulvern mit Lactose, umfassend oder bestehend aus den folgenden Schritten:
(a) Bereitstellen eines Milchkonzentrats, welches eine Trockenmasse von 35-60 Gew-% aufweist,
(b) Bereitstellen von Lactose in fester Form;
(c) Vermahlen der Lactose aus Schritt (b) auf eine definierte mittlere Teilchengrösse von 30-60 µm sowie
(d) gemeinsames Aufgeben des Milchkonzentrats aus Schritt (a) und der vermahlenen Lactose aus Schritt (c) auf einen Sprühturm unter Erhalt eines trockenen Mischpulvers, wobei die getrockneten Pulver einen Proteingehalt von 34 Gew.-% und eine Restfeuchte von weniger als 5 Gew.-% und eine mittelere Teichengrösse von 30-60 µm aufweisen.

Überraschenderweise wurde gefunden, dass durch vermahlen der Lactose auf eine Teilchengröße, die der Größe der bei der Sprühtrocknung erhaltenen Milchpartikel entspricht, keine Entmischung mehr auftritt, sondern ganz im Gegenteil Agglomerate gebildet werden, die sich als äußert stabil erweisen. Die Erkenntnis, dass unter den geschilderten Bedingungen tatsächlich Agglomerate entstehen, bei denen sich die Lactosepartikel an die getrockneten Milchbestandteile anheften und so Agglomerate bilden, ist neu. Diese Agglomerate weisen vorteilhafte Eigenschaften auf, insbesondere haben sie eine deutlich geringe Neigung zu verkleben.

Der Kern der Erfindung besteht dabei in der Erkenntnis, dass nur im Fall, dass Lactose und Milchpartikel die gleiche oder zumindest annähernd gleiche Teilchengröße aufweisen, Agglomeration stattfindet. Dem Fachmann ist dabei bekannt, dass beim Versprühen von Milchkonzentraten die resultierenden Pulver eine mittlere Teilchengröße von 30 bis 60 µm aufweisen. Wenn also die technische Lehre darin besteht, die Lactose auf die gleiche oder annähernd gleiche mittlere Teilchengröße wie die Milchpartikel zu vermahlen, bedarf es keiner erfinderischen Tätigkeit, die richtige Teilchengröße zu ermitteln. Vielmehr wird entweder eine Lactose eingesetzt, die auf eine mittlere Teilchengröße innerhalb des angegebenen Bereiches vermahlen wurde, oder aber der Fachmann kann mit einem Versuch, bei dem er Milchpulver ohne Zusatz von Lactose versprüht, die konkrete mittlere Teilchengröße ermitteln und die Lactose gezielt entsprechend vermahlen.

Setzt man nämlich Lactosepulver ein, welches einen deutlich größeren mittleren Teilchendurchmesser aufweist, beispielsweise von 100 µm, findet keine Bildung von Agglomeraten statt, sondern die beiden Bestandteile liegen getrennt voneinander in einer Pulvermischung vor.

Der guten Ordnung halber sei an dieser Stelle darauf hingewiesen, dass im Sinne der vorliegenden Erfindung mit mittlerer Teilchengröße der Mittelwert über die Teilchengrößenverteilung gemeint ist. Die Erfindung wird durch die beiliegenden Ansprüche definiert.

### EINSATZSTOFFE

Die Auswahl der Einsatzstoffe zur Herstellung der Milchpulver ist unkritisch. Es kommen sowohl Rohmilch als auch Vollmilch in Frage. Bevorzugt ist jedoch der Einsatz von Magermilch, was dann ebenfalls zur bevorzugten Herstellung von Magermilchpulver führt.

### MILCHKONZENTRATE

Die Herstellung der Milchkonzentrate erfolgt in konventionellen Eindampfern, in denen der Milch schonend Wasser entzogen wird. Es ist zwar möglich, die Konzentrierung in einem Schritt durchzuführen, um eine zu hohe thermische Belastung der Milch zu vermeiden, arbeitet man üblicherweise zweistufig, d.h. im ersten Schritt wird ein Konzentrat hergestellt, welches eine Trockenmasse von 35 bis 40 Gew.-% aufweist, das dann in der zweiten Stufe auf eine Trockenmasse von 50 bis 60 Gew.-% aufkonzentriert wird.

Die Milchkonzentrate die auf den Sprühturm aufgegeben werde, haben die eine Trockenmasse von 35 bis 60 Gew.-% und insbesondere von 45 bis 55 Gew.-% aufweisen.

### STANDARDISIERUNG

Die zur Standardisierung verwendete Lactose kann übliche Handelsware darstellen. Einzige Anforderung ist, dass sie auf eine mittlere Teilchengröße von 30 bis 60 µm und insbesondere 40 bis 50 µm vermahlen wird. Dies kann in jeder herkömmlichen Zerkleinerungsvorrichtung wie beispielsweise einer Stiftmühle erfolgen. Die für die Standardisierung erforderliche Menge an Lactose ist so zu wählen, dass im Trocknungsprodukt ein Proteingehalt von 34 Gew.-% vorliegt. Die konkrete Menge kann der Fachmann auf einfachem Wege ausgehend vom Proteingehalt des Milchkonzentrats errechnen, ohne hierzu erfinderisch tätig werden zu müssen.

### SPRÜHTROCKNUNG

Die Trocknung von Milchpulvern ist aus dem Stand der Technik hinreichend bekannt. Grundsätzlich kommen für diese Operation alle üblichen Turmverfahren in Betracht, insbesondere auch solche die mit Fließbetten und Wirbelschichten arbeiten. Für die vorliegende Erfindung reicht jedoch ein konventioneller Sprühturm aus, bei dem das Milchkonzentrat aufgegeben wird und zwar über eine oder auch mehrere Düsen. Dabei trifft das so im oberen Teil des Turms vernebelte Milchkonzentrat auf Heißluft mit einer Temperatur von 180 bis 220 °C und vorzugsweise 200 °C. Gleichzeitig wird das Lactosepulver ebenfalls am Kopf des Sprühturms aufgegeben wird, so dass die Vermischung von Milchkonzentrat und Lactose bereits im oberen Teil des Sprühturms stattfindet. Die Lactoseteilchen heften sich dabei an die zu Trocknen beginnenden festen Milchbestandteile und bilden schwerere Aggregate die der Schwerkraft folgend zu Boden fallen und dabei ihren Wasseranteil fast vollständig verlieren. Das so getrocknete und noch 55 bis 65 °C heiße Pulver verlässt den Sprühturm mit einer Temperatur von 45 bis 60 °C und wird außerhalb beispielsweise auf einer Rüttelrinne nachgetrocknet und bis auf 20 °C abgekühlt. Das so erhaltene Milchpulver weist schließlich - typisch - einen Proteingehalt von 34 Gew.-% und eine Restfeuchte von weniger als 5 Gew.-% und vorzugsweise von 3,5 bis 4,5 Gew.-% auf

Vorzugsweise erfolgt die Sprühtrocknung in einem Trocknungsturm mit Nachtrockeneinrichtungen (Fließbett), den das Gut bei Temperaturen zwischen 15° und 30°C verlässt

### GEWERBLICHE ANWENDBARKEIT

Ein weiterer Gegenstand der Erfindung betrifft Verwendung von Lactosepulver mit einer mittleren Teilchengröße von 30 bis 60 µm und insbesondere 40 bis 50 µm in einem Verfahren gemäß Anspruch 1 zur Herstellung von Milchpulvern mit standardisiertem Proteingehalt.

### BEISPIELE

### BEISPIEL 1

### Herstellung eines erfindungsgemäßen Magermilchpulvers

1000 L Magermilch wurden in einem ersten Eindampfer bis auf eine Trockenmasse von 36 Gew.-% und dann in einem zweiten Verdampfer bis auf 50 Gew.-% aufkonzentriert. Das Magermilchkonzentrat wurde über eine Düse am Kopf eines Sprühturms der Firma NIRO kontinuierlich aufgegeben und vernebelt. In den Nebel wurden gleichzeitig kontinuierlich 7 kg Lactose mit einer mittleren Teilchengröße von 50 µm eindosiert. Die Temperatur der Trocknungsluft betrug 200 °C, die der Ablauft 80 °C. Das getrocknete Pulver wurde am Boden des Turms mit einer Temperatur von 45 °C abgenommen, auf einer Rüttelrinne nachgetrocknet und bis auf 20 °C abgekühlt. Der Proteinanteil des Pulvers betrug 34,5 Gew.-% in der TM, die Restfeuchte lag unter 4,6 Gew.-%

Mikrophotographische Untersuchungen zeigten, dass es sich bei dem Pulver im Wesentlichen um Mischagglomerate von Lactose und festen Milchbestandteilen handelt. Proben des Pulvers wurden in verschließbare Plastikbeutel abgepackt und bei 20 bzw. 40 °C über 6 Wochen gelagert. Alle Proben erwiesen sich auch nach Ablauf von 6 Wochen als rieselfähig und enthielten keine verklumpten Anteile.

### VERGLEICHSBEISPIEL V1

### Herstellung eines Vergleichpulvers

1000 L Magermilch wurden in einem ersten Eindampfer bis auf eine Trockenmasse von 35 Gew.-% und dann in einem zweiten Verdampfer bis auf 50 Gew.-% aufkonzentriert. Das Magermilchkonzentrat wurde über eine Düse am Kopf eines Sprühturms der Firma NIRO kontinuierlich aufgegeben und vernebelt. In den Nebel wurden gleichzeitig kontinuierlich 7 kg Lactose mit einer mittleren Teilchengröße von 100 µm eindosiert. Die Temperatur der Trocknungsluft betrug 200 °C, die der Ablauft 80 °C. Das getrocknete Pulver wurde am Boden des Turms mit einer Temperatur von 47 °C abgenommen, auf einer Rüttelrinne nachgetrocknet und bis auf 20 °C abgekühlt. Der Proteinanteil des Pulvers betrug 34,5 Gew.-% in der TM, die Restfeuchte lag unter 4,6 Gew.-%

Mikrophotographische Untersuchungen zeigten, dass in bei dem Pulver Lactose und feste Milchbestandteilen ganz überwiegend nebeneinander vorlagen; es wurden praktisch keine Agglomerate gefunden. Auch hier wurden Proben des Pulvers in verschließbare Plastikbeutel abgepackt und bei 20 bzw. 40 °C über 6 Wochen gelagert. Schon nach 4 Wochen waren alle Proben nicht mehr frei rieselfähig. Nach 6 Wochen Lagerung waren die Proben, die bei 20 °C gelagert worden waren, teilweise verklumpt & entmischt, die Proben, die bei 40 °C gelagert worden waren, waren stark verklumpt, wobei die Lactose in einem amorphen Zustand vorlag.

## Patentansprüche

1. Verfahren zur Herstellung von Milchpulvern mit Lactose, umfassend oder bestehend aus den folgenden Schritten:
(a) Bereitstellen eines Milchkonzentrats, welches eine Trockenmasse von 35 bis 60 Gew.-% aufweist;
(b) Bereitstellen von Lactose in fester Form;
(c) Vermahlen der Lactose aus Schritt (b) auf eine mittlere Teilchengröße von 30 bis 60 µm; sowie
(d) gemeinsames Aufgeben des Milchkonzentrats aus Schritt (a) und der vermahlenen Lactose aus Schritt (c) auf einen Sprühturm unter Erhalt eines trockenen Mischpulvers,
wobei die getrockneten Pulver einen Proteingehalt von 34 Gew.-% und eine Restfeuchte von weniger als 5 Gew.-% und eine mittlere Teilchengröße von 30 bis 60 µm aufweisen.

2. Verfahren nach Anspruch 1, **dadurch gekennzeichnet, dass** man Konzentrate von Rohmilch, Vollmilch oder Magermilch einsetzt.

3. Verfahren nach Anspruch 2, **dadurch gekennzeichnet, dass** man Konzentrate einsetzt, die eine Trockenmasse von 45 bis 55 Gew.-% aufweisen.

4. Verfahren nach mindestens einem der Ansprüche 1 bis 3, **dadurch gekennzeichnet, dass** man die Lactose auf eine mittlere Teilchengröße von 40 bis 50 µm vermahlt.

5. Verfahren nach mindestens einem der Ansprüche 1 bis 4, **dadurch gekennzeichnet, dass** das Milchkonzentrat am Kopf des Sprühturms über eine oder mehrere Düsen eindosiert wird.

6. Verfahren nach mindestens einem der Ansprüche 1 bis 5, **dadurch gekennzeichnet, dass** das Lactosepulver ebenfalls am Kopf des Sprühturms aufgegeben wird, so dass die Vermischung von Milchkonzentrat und Lactose bereits im oberen Teil des Sprühturms stattfindet.

7. Verfahren nach mindestens einem der Ansprüche 1 bis 6, **dadurch gekennzeichnet, dass** der Sprühturm am Kopf mit Heißluft betrieben wird, die eine Temperatur von 180 bis 220 °C aufweist.

8. Verfahren nach mindestens einem der Ansprüche 1 bis 7, **dadurch gekennzeichnet, dass** das getrocknete Pulver den Sprühturm mit einer Temperatur von 15 bis 30 °C verlässt.

9. Verfahren nach mindestens einem der Ansprüche 1 bis 8, **dadurch gekennzeichnet, dass** Agglomerate von festen Milchpartikeln und Lactose erhalten werden.

10. Verwendung von Lactosepulver mit einer mittleren Teilchengröße von 30 bis 60 µm in einem Verfahren gemäß Anspruch 1 zur Herstellung von Milchpulvern mit standardisiertem Proteingehalt.

## Claims

1. A process for preparing milk powders containing lactose comprising or consisting of the following steps:
(a) providing a milk concentrate having a dry matter of 35 to 60% by weight;
(b) providing lactose in solid form;
(c) grinding the lactose from step (b) to an average particle size of 30 to 60 µm; and
(d) feeding the milk concentrate from step (a) and the ground lactose from step (c) together onto a spray tower to obtain a dry mixed powder,
wherein the dried powders have a protein content of 34% by weight and a residual moisture content of less than 5% by weight and an average particle size of 30 to 60 µm.

2. Process according to claim 1, **characterised in that** concentrates of raw milk, whole milk or skimmed milk are used.

3. Process according to claim 2, **characterised in that** concentrates are used which have a dry matter of 45 to 55 wt.%.

4. Process according to at least one of claims 1 to 3, **characterized in that** the lactose is ground to a mean particle size of 40 to 50 µm.

5. Process according to at least one of claims 1 to 4, **characterised in that** the milk concentrate is metered out at the head of the spray tower via one or more nozzles.

6. Process according to at least one of claims 1 to 5, **characterised in that** the lactose powder is also metered out at the top of the spray tower, so that the mixing of milk concentrate and lactose already takes place in the upper part of the spray tower.

7. Process according to at least one of claims 1 to 6, **characterised in that** the spray tower is operated at the head with hot air which has a temperature of 180 to 220 °C.

8. Process according to at least one of claims 1 to 7, **characterized in that** the dried powder leaves the spray tower at a temperature of 15 to 30 °C.

9. Process according to at least one of claims 1 to 8, **characterized in that** agglomerates of solid milk particles and lactose are obtained.

10. Use of lactose powder with an average particle size of 30 to 60 µm in a process according to claim 1 for the preparation of milk powders with standardised protein content.

## Revendications

1. Procédé de fabrication de poudres de lait avec du lactose, comprenant ou constitué par les étapes suivantes :
(a) la préparation d'un concentré de lait, qui présente une masse sèche de 35 à 60 % en poids ;
(b) la préparation de lactose sous forme solide ;
(c) le broyage du lactose de l'étape (b) à une taille de particule moyenne de 30 à 60 µm ; et
(d) le chargement commun du concentré de lait de l'étape (a) et du lactose broyé de l'étape (c) sur une tour de pulvérisation avec obtention d'une poudre de lait sèche,
les poudres séchées présentant une teneur en protéines de 34 % en poids et une humidité résiduelle inférieure à 5 % en poids et une taille de particule moyenne de 30 à 60 µm.

2. Procédé selon la revendication 1, **caractérisé en ce que** des concentrés de lait brut, de lait entier ou de lait écrémé sont utilisés.

3. Procédé selon la revendication 2, **caractérisé en ce que** des concentrés qui présentent une masse sèche de 45 à 55 % en poids sont utilisés.

4. Procédé selon au moins l'une quelconque des revendications 1 à 3, **caractérisé en ce que** le lactose est broyé à une taille de particule moyenne de 40 à 50 µm.

5. Procédé selon au moins l'une quelconque des revendications 1 à 4, **caractérisé en ce que** le concentré de lait est introduit à la tête de la tour de pulvérisation par l'intermédiaire d'une ou de plusieurs buses.

6. Procédé selon au moins l'une quelconque des revendications 1 à 5, **caractérisé en ce que** la poudre de lactose est également chargée à la tête de la tour de pulvérisation, de telle sorte que le mélange du concentré de lait et du lactose ait déjà lieu dans la partie supérieure de la tour de pulvérisation.

7. Procédé selon au moins l'une quelconque des revendications 1 à 6, **caractérisé en ce que** la tour de pulvérisation est exploitée à la tête avec de l'air chaud, qui présente une température de 180 à 220 °C.

8. Procédé selon au moins l'une quelconque des revendications 1 à 7, **caractérisé en ce que** la poudre séchée quitte la tour de pulvérisation avec une température de 15 à 30 °C.

9. Procédé selon au moins l'une quelconque des revendications 1 à 8, **caractérisé en ce que** des agglomérats de particules de lait solides et de lactose sont obtenus.

10. Utilisation d'une poudre de lactose ayant une taille de particule moyenne de 30 à 60 µm dans un procédé selon la revendication 1 pour la fabrication de poudres de lait ayant une teneur en protéines standardisée.
